# EUROPEAN PATENT APPLICATION

(11) **EP 2 719 436 A1**
(43) Date of publication of application: **16.04.2014**
(21) Application number: 12187945.6
(22) Date of filing: 10.10.2012
(51) Int. Cl.: B01D 29/68, C02F 11/12

(54) **An arrangement and a method for filtrating a rough-filtrated sludge**

(71) Applicant: Biotain AB, 262 73 Ängelholm (SE)
(72) Inventor: DORSEY, William, 183 53 TÄBY (SE)
(74) Representative: Olsson, Jan

(57) **Abstract**

An arrangement for filtrating a rough-filtrated sludge comprises a filter body having a filter surface member (5') retaining sludge particles on a first side (51) thereof and letting liquid substance of the sludge pass through. The filter body is arranged with said filter surface member extending in a substantially vertical plane. A jet of gas is directed onto a second side (46) of the filter surface member so as to promote passing of said liquid substance therethrough.

## Description

### TECHNICAL FIELD OF THE INVENTION AND BACKGROUND ART

The present invention relates to an arrangement for filtrating a rough-filtrated sludge comprising
● a filter body having at least one filter surface member configured to filter a said sludge by retaining particles of the sludge onto a first side thereof and letting liquid substance of the sludge pass through, and
● means configured to feed a said sludge to be filtered onto said first side of said at least one filter surface member,
as well as a method according to the preamble of the appended independent method claim.

The invention relates to such an arrangement for filtrating a rough-filtrated sludge of any conceivable type, but a sludge in the form of cattle droppings and a sewage sludge may be mentioned as typical examples without restricting the invention thereto. The invention also covers filtrating arrangements of this type which may be used where such arrangements have so far not been used, such as in connection with dwelling houses for taking care of sewage from water closets.

"Rough-filtrated" is here to be interpreted broadly, and said sludge does not have to have been subjected to an extensive filtration before arriving to said arrangement, but said rough-filtration may be as simple as removal of larger objects from the sludge, such as in said theoretical field of use in dwelling houses, tampons and cotton buds, by making the sludge to pass a net with coarse meshes.

Such an arrangement is used for taking care of the content of a said sludge and the object of such an arrangement may vary a lot. This object may be to remove something from the sludge, so that the liquid substance thereof may be more efficiently treated in any way for taking care of the content thereof. The main object of an arrangement of this type may also be to obtain retention of particles and removal thereof from said liquid substance for taking care of these particles. This may for instance be for utilizing these as a biomass for combustion or gasification or as a substrate for production of biogas or as a fertilizer.

Filtering carried out in known arrangements of this type normally involves pressing of said rough-filtrated sludge against said filter surface, so that liquid substance as well as small solid particles of the sludge will pass therethrough. Such pressing is for instance obtained by rotating said filter body and by that exerting the sludge to centrifugal forces.

Although such a procedure may be efficient with respect to separating particles from liquid substance of a sludge there is still a disadvantage that small solid particles are following the liquid substance through the filter surface. This may require additional treatment of the liquid substance for a subsequent use thereof and the loss of some of the particles which theoretically otherwise had been taken care of. Furthermore, known arrangements of this type are complicated to the construction and by that costly.

### SUMMARY OF THE INVENTION

The object of the present invention is to provide an arrangement and a method of the type defined in the introduction being improved in at least some aspect with respect to such arrangements and methods already known.

This object is according to the invention obtained by providing such an arrangement, which is characterized in that
● said filter body is configured to be arranged with said at least one filter surface member extending in a substantially vertical plane,
● the gravitation is utilised for obtaining passing of said liquid substance of the sludge through said filter surface member into a space on a second side of said member opposite to said first side, and
● the arrangement comprises means configured to direct at least one jet of gas onto said second side of said filter surface member so as to promote passing of said liquid substance therethrough from said first to said second side thereof, and means configured to move the impact area of said jet over said second side of the filter surface member.

Such an arrangement is remarkably simple to the construction and may by that be obtained to a low cost and have a very reliable function. It will in spite of that enable a very efficient filtering of a said rough-filtrated sludge, partially by the fact that the gravitation is utilized for obtaining passing of the liquid substance of the sludge through said filter surface member of the filter body, but primarily by the fact that said at least one jet of gas is directed onto said second side of the filter surface member. This has a surprisingly positive influence upon the efficiency of the filtration. This may be explained by the behaviour of the sludge forced away from said first side of the filter surface member where the gas jet hits the second side of this member. The liquid of this sludge forced away will return quicker than the solid parts when the jet moves away and by that be efficiently "sucked" through the filter surface member by capillary effects.

Although such an arrangement is well suited to be used in plants for production of biogas or in water cleaning plants it may thanks to the simplicity combined with the high efficiency thereof advantageously be arranged in connection with dwelling houses to take care of sewage from water closets already in that area.

According to an embodiment of the invention said gas jet directing means is configured to direct a gas jet with a said impact area having an elongated extension, such as being substantially line-like or line-like, onto said filter surface member. It has turned out that moving a jet with such a concentrated impact area over the filter surface member is favourable for obtaining the efficient filtration aimed at.

According to another embodiment of the invention said jet impact area moving means is configured to move said jet impact area to scan substantially the entire or the entire area of the second side of said filter surface member. It is then also advantageous to have the gas jet directing means configured to direct a gas jet creating an impact area of a substantially vertical line or of a vertical line onto said filter surface member, such as having a gas-knife character.

According to another embodiment of the invention said gas jet directing means is configured to direct a jet of air towards said filter surface member. The use of air as said gas is mostly preferred from the cost point of view, although other gases are conceivable, and it would also be possible to mix any gas component not present in air into said air gas or have another proportion of the gas components of said air than normally being the case for air would that be suitable for the type of sludge processed or for later processing of the liquid or solid parts of the sludge.

According to another embodiment of the invention said gas jet directing means is configured to direct a gas jet with a pressure of 0.3 - 6 bars, 0.5 - 4 bars or 1.0 - 3.0 bars towards said filter surface member. A pressure of said gas jet within these ranges is suitable, and the actual pressure used will be dependent upon the proportion of liquid and the size of solid particles of the sludge to be filtrated. The smaller proportion of liquid the higher gas jet pressure is needed. The larger size of the solid particles in the sludge the higher pressure is needed.

According to another embodiment of the invention the arrangement comprises means configured to spray a liquid onto said filter surface member for cleaning this. Such cleaning will then take place when the filtration is stopped by stopping the feeding of sludge and the application of said gas jet for the filtration. It is then suitable if the gas jet moving means is configured to also move said liquid spraying means to scan at least a part of the area of the second side of said filter surface member. Said spraying means is according to another embodiment of the invention configured to spray liquid substance obtained by passing through said filter surface member from said space onto said filter surface member. It is preferred to utilise said liquid substance already obtained as liquid to be sprayed by said spraying means.

According to another embodiment of the invention the arrangement comprises means configured to enable removal of particles retained on said first side of the filter surface member after a stop of feeding of sludge to said first side of the filter surface member. After such removal efficient filtering may be carried out again.

According to another embodiment of the invention the arrangement comprises a device configured to create a negative gas pressure inside a casing enclosing said filter body for removal of gas contained in said sludge through a top wall of the casing. This means that gas contained in said sludge may be separated from said liquid substance and be taken care of.

According to another embodiment of the invention said filter surface member has filter openings with a diameter of 0.5 µm - 200 µm, 1 µm - 100 µm, 2 µm - 80 µm or 10 µm - 60 µm. "Diameter" is here to be interpreted broadly, and it is not necessary that the openings or apertures of the filter surface member are circular and the diameter is otherwise defined as the largest distance between two opposite borders of such an opening. The diameter chosen for said filter openings will depend upon the intended use of the arrangement.

The invention also relates to a method for filtrating a rough-filtrated sludge according to the appended independent method claim. The advantageous features and advantages of such a method appear clearly from the above discussion of the arrangement according to the present invention.

The invention also relates to a use of an arrangement according to the invention for filtrating a rough-filtrated sludge emanating from cattle droppings or sewage sludge, such as in connection with dwelling houses.

Further advantages as well as advantageous features of the invention will appear from the following description of embodiments of the invention.

### BRIEF DESCRIPTION OF THE DRAWINGS

With reference to the appended drawings, below follows a specific description of embodiments of the invention cited as examples.

In the drawings:
- Fig 1: is a simplified perspective view from below of an arrangement according to a first embodiment of the present invention,
- Fig 2: is a simplified perspective view from above of the arrangement shown in Fig 1,
- Fig 3: is a schematic view from above of a part of the arrangement shown in Fig 1,
- Fig 4: is a simplified, partially sectioned side elevation view of a part of the arrangement shown in Fig 1,
- Fig 5: is a perspective view from above of a part of an arrangement according to a second embodiment of the invention,
- Fig 6: is a view of the part shown in Fig 5 from another angle, and
- Fig 7: is an enlarged side-elevation view of some details of the part shown in Figs 5 and 6.

### DETAILED DESCRIPTION OF EMBODIMENTS OF THE INVENTION

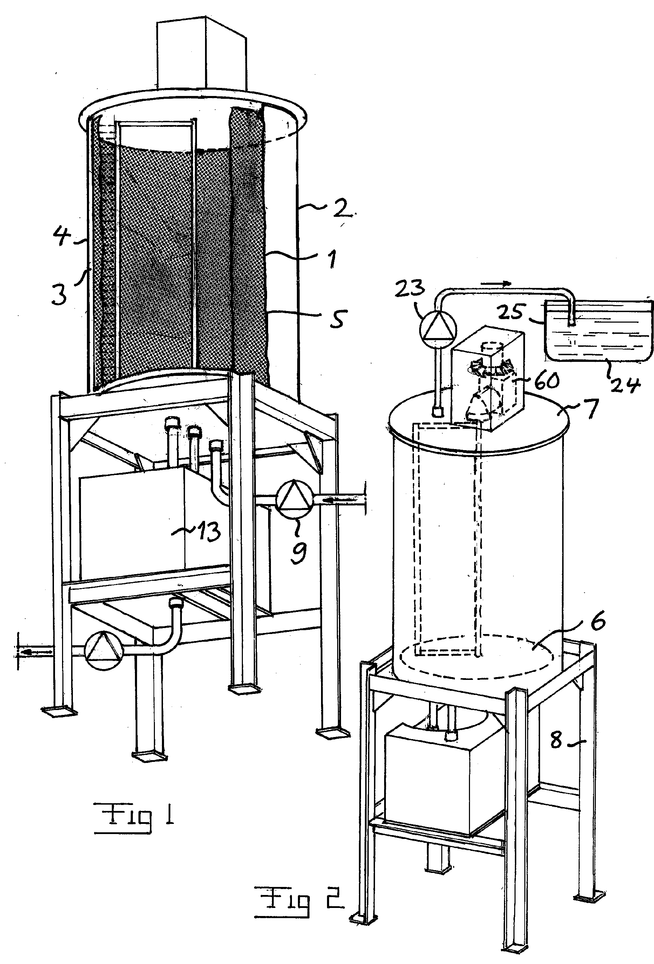

An arrangement according to a first embodiment of the invention for filtrating a rough-filtrated sludge is schematically illustrated in the appended Figures 1-4 and will now be described while at the same time making reference to all these Figures. The arrangement has a filter body 1 with a tubular shape and a circular cross-section. The filter body is made of a net with a mesh size of 1 µm - 200 µm. The filter body is received in a casing 2 with a circular cross-section and co-axially arranged with respect to the filter body while forming a filter space 3 therebetween. The thickness of this filter space defined by circumferential walls 4 of the casing and a filter surface member 5 of the filter body is typically 3-10 cm.

The casing and the filter body are configured to be arranged with their centre axis extending substantially vertically. Said filter space 3 is at one end closed by a bottom 6 of the casing and at the other of a top wall 7 of the casing. Diameter and height of the filter body and casing are typically about 1 m and 1.5 m, respectively, but may have any values suitable for the intended use.

The casing with the filter body is arranged on a frame 8 to be resting on the ground, such as the floor in a room.

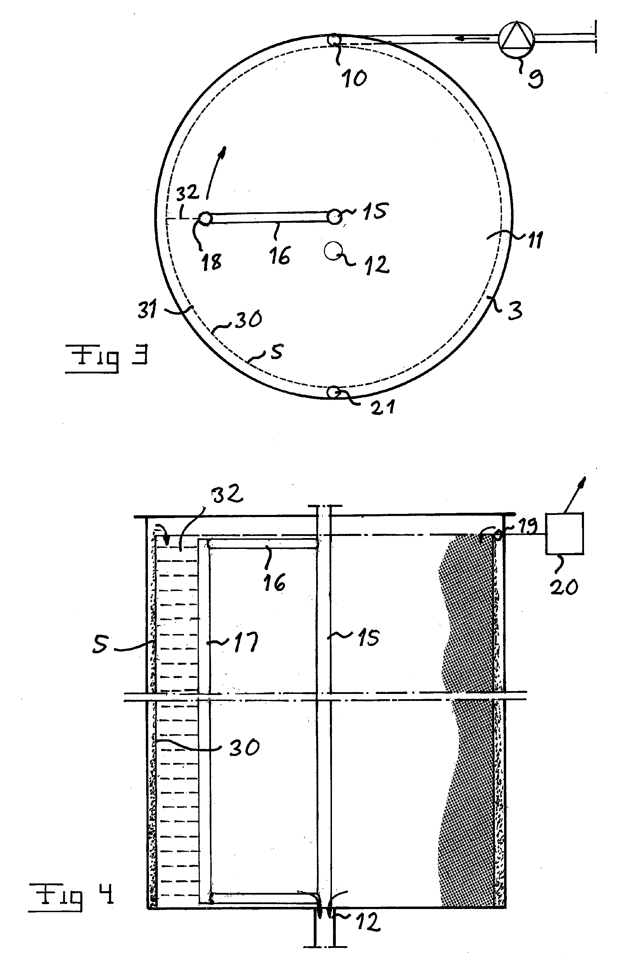

The arrangement also comprises means illustrated by a pump 9 configured to feed a sludge to be filtered from below through a hole 10 in the bottom of the casing into said filter space 3 (see Fig 3). This sludge should be rough-filtrated in the sense mentioned in the introduction and may be of any conceivable type and is here to be considered to emanate from cattle droppings or sewage sludge from water closets. This means that liquid substance of the sludge will by the gravitation pass through the filter surface 5 of the filter body into a central space 11 of the casing surrounded by the filter body and out through an opening 12 in the bottom 6 of the casing for being collected in a container 13. Sludge particles 14 being too large for passing through the filter body will be retained on the filter surface, and such particles are schematically illustrated in Fig 4.

The level of the sludge particles inside the filter surface will gradually increase, since the height to which the filter surface will be obstructed by sludge particles retained thereon will gradually increase.

A shaft 15 extends substantially along the centre axis of the casing 2. An arm 16 is secured to said shaft and carries a further hollow shaft 17 at a small distance to a second side 30 of the filter surface member 5 opposite to a first side 31 thereof onto which said sludge to be filtered is fed. The hollow shaft 17 has a longitudinal slit 18 opening substantially radially with respect to said casing. The arrangement has means not shown for feeding gas, such as air, to said hollow shaft 17 for directing a gas jet through said slit 18 onto said second side 30 of the filter surface member, which will promote passing of liquid substance therethrough from said first to said second side thereof. Thus, a gas jet with an impact area having an elongated extension, such as being substantially line-like, will be directed onto the filter surface member. Means 60, such as a motor indicated in Fig 2, is configured to move said impact area of said jet over said second side 30 of the filter surface member by rotating the shaft 15. The gas jet 32 so created will force sludge hit thereby away from said first side 31 of the filter surface member, and when the impact area of the jet moves away the liquid of this sludge forced away will return quicker than the solid parts and by that be efficiently "sucked" through the filter surface member by capillary effects.

The arrangement has also means 19 (see Fig 4) configured to detect if a determined height has been reached by sludge particles 14 retained in the filter surface 3 and send information thereabout to a member 20 configured to control the feeding means 9 to stop feeding a said sludge into the filter space when this determined height has been reached. The arrangement has means schematically indicated by a hole 21 in the bottom of the casing configured to enable removal of the retained particles after said stop of the feeding of the sludge to the filter space. The filter will after such removal be cleaned by spraying liquid on said second side of the filter surface member 5 through nozzles not shown, whereupon the pump 9 may be controlled to start to feed a said sludge to the filter surface again for filtration thereof. It is shown that the arrangement also has means 22 for pumping the liquid collected in the container 13 away therefrom for further treatment or for being used in the spraying action of the nozzles 15.

It is shown in Fig 2 how the arrangement may also have means 23, such as a fan, configured to create a negative gas pressure inside the casing 2 for removal of gas contained in the sludge through a top wall 7 of the casing. This gas may then be conducted into a solution 24 in a vessel 25 for taking care thereof.

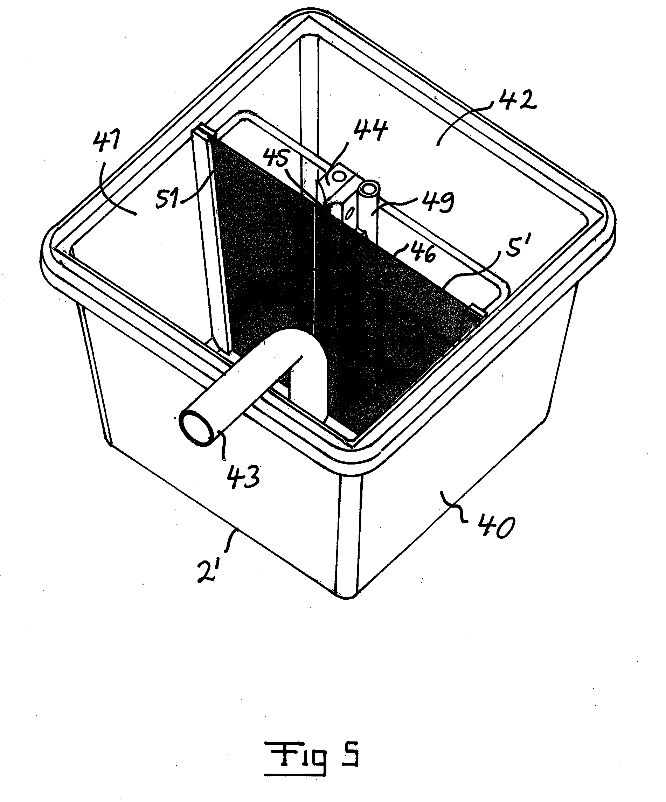

Fig 5 illustrates a part of an arrangement according to a second embodiment of the invention having a casing 2' with a substantially rectangular, here square, cross-section intended to be arranged with walls 40 thereof extending substantially vertically. A filter surface member 5' also configured to extend substantially vertically divides the interior of the casing 2' into two rooms 41, 42. A sludge to be filtrated is intended to be fed to one 41 of the rooms through a pipe 43. A member 44 having a longitudinal slit 45 for directing a gas jet with a line-like impact area onto a second side 46 of the filter surface member 5' is arranged in the room 42. A means configured to move the impact area of said jet over said second side of the filter surface member is schematically illustrated by guides 47, 48.

The arrangement has also means 49 configured to spray a liquid onto the filter surface member 5' for cleaning thereof, and this means is attached to the member 44 with the slit 45 for directing a gas jet towards the filter surface member.

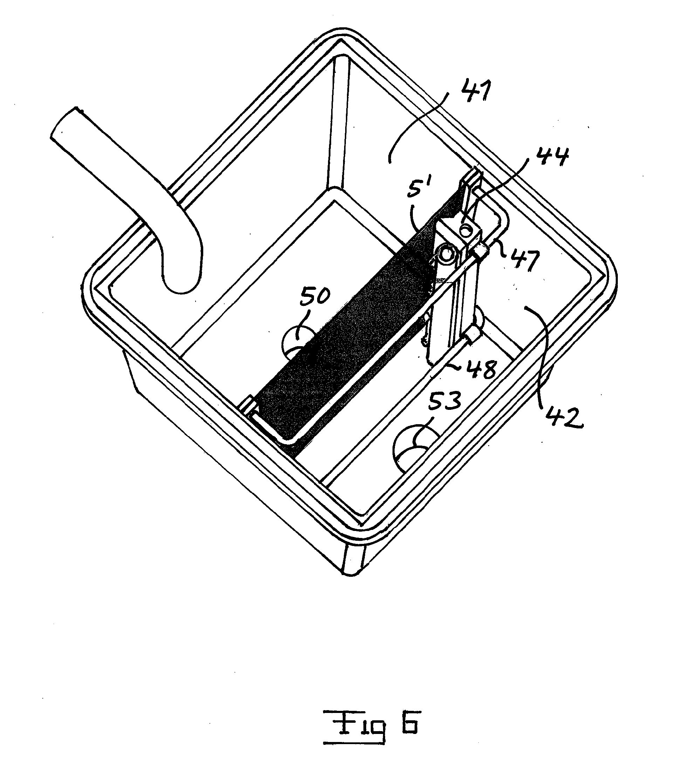

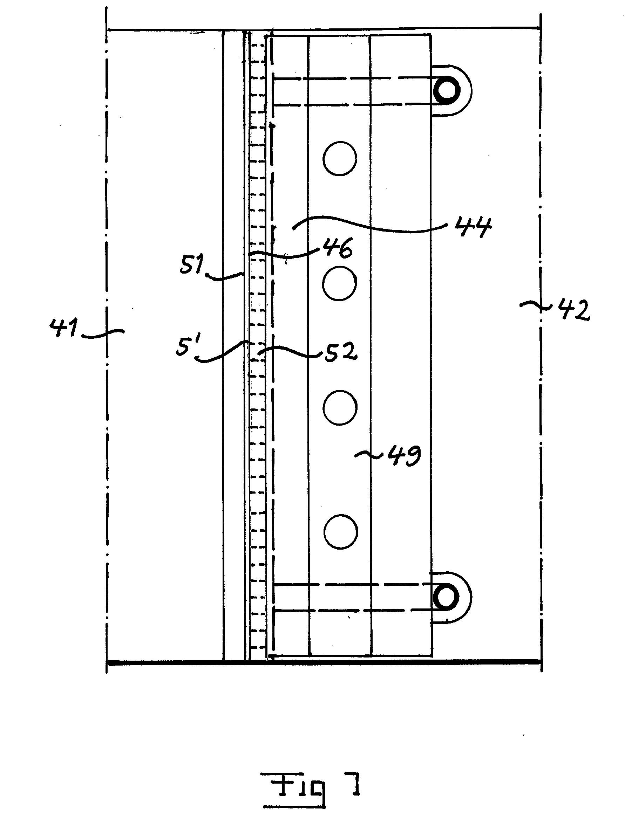

The arrangement shown in Fig 5-7 will operate as follows. A sludge to be filtrated is fed to the room 41 through the pipe 43. A hole 50 in the bottom of the room 41 will then be closed. Liquid substances of the sludge will through gravitation flow from a first side 51 of the filter surface member through the filter surface member and particles of the sludge will be retained on this first side of the filter surface member. The member 44 will direct a jet 52 of gas, such as air, onto the second side 46 of the filter surface member, which will force sludge bearing on the first side thereof opposite to said impact area of the jet away from said first side. The member 44 is controlled to move the impact area of the jet over the second side 46 of the filter surface member 5', and when said impact area moves liquid forced away by said jet will return quicker to the first side of the filter surface member than the solid particles and pass through the filter surface member. The jet impact area moving means is preferably configured to move the jet impact area to scan substantially the entire area of the second side 46 of the filter surface member 5'. Liquid entering the room 42 will leave this through an opening 53 in the bottom thereof for further treatment. When judged to be appropriate feeding of sludge to the room 41 will be stopped, and solid particles retained therein will be removed through the hole 50 in the bottom. The filter surface member 5' will after such removal be cleaned by spraying liquid on said second side 46 of the filter surface member 5' through nozzles in the member 49. The spraying means may be configured to spray liquid arriving from said liquid substance obtained by passing through the filter surface member from the room 41 onto the second side of the filter surface member.

The principle of the present invention based on utilising a gas jet applied on said second side for filtration makes it possible to make a huge reduction of the maximum size of particles in one single step from one side of the filter surface member to the other side thereof, such as from 100 µm to 1-3 µm.

The invention is of course not in any way restricted to the embodiments thereof described above, but many possibilities to modifications thereof will be apparent to a person with ordinary skill in the art without departing from the scope of the invention as defined in the appended claims.

It is of course possible that the arrangement has no means for withdrawal of gas from said sludge, especially if the arrangement is used on a spot in a sludge treating cycle where the sludge is not prepared for that yet.

There is only one filter surface member in the embodiment shown in Figs 5-7, but two such members may for instance be arranged with a gap therebetween defining a said room corresponding to room 42. Sludge to be filtrated may then be fed to two rooms separated by the room so defined.

The gas jet directing means, such as the member 44 in the second embodiment, may also be configured to physically touch, i.e. bear against, said second side of the filter surface member when moved over this. This will further increase said capillary effects and be combined with the impact of gas jet upon the filter surface member.

It is also possible to provide means configured to shake or vibrate a frame or the like upon which filter body carrying means are arranged for shaking the filter surface member and by that further improving the efficiency of the filtering.

## Claims

1. An arrangement for filtrating a rough-filtrated sludge comprising
● a filter body (1) having at least one filter surface member (5, 5') configured to filter a said sludge by retaining particles of the sludge onto a first side (31, 51) thereof and letting liquid substance of the sludge pass through, and
● means (9) configured to feed a said sludge to be filtered onto said first side of said at least one filter surface member,
***characterized* in that**
● said filter body is configured to be arranged with said at least one filter surface member (5, 5') extending in a substantially vertical plane,
● the gravitation is utilised for obtaining passing of said liquid substance of the sludge through said filter surface member into a space (11, 42) on a second side (30, 46) of said member opposite to said first side, and
● the arrangement comprises means (17, 44) configured to direct at least one jet (32, 52) of gas onto said second side (30, 46) of said filter surface member so as to promote passing of said liquid substance therethrough from said first to said second side thereof, and means (15, 60, 47, 48) configured to move the impact area of said jet over said second side of the filter surface member.

2. An arrangement according to claim 1, ***characterized* in that** said gas jet directing means (17, 44) is configured to direct a gas jet (32, 52) with a said impact area having an elongated extension, such as being substantially line-like or line-like, onto said filter surface member.

3. An arrangement according to claim 1 or 2, ***characterized* in that** said jet impact area moving means (15, 60, 47, 48) is configured to move said jet impact area to scan substantially the entire or the entire area of the second side (30, 46) of said filter surface member.

4. An arrangement according to any of the preceding claims, ***characterized* in that** said gas jet directing means (17, 44) is configured to direct a gas jet creating an impact area of a substantially vertical line or of a vertical line onto said filter surface member, such as having a gas-knife character.

5. An arrangement according to any of the preceding claims, ***characterized* in that** said gas jet directing means (17, 44) is configured to direct a jet of air towards said filter surface member.

6. An arrangement according to any of the preceding claims, ***characterized* in that** said gas jet directing means (17, 44) is configured to direct a gas jet with a pressure of 0.3 - 6 bars, 0.5 - 4 bars or 1.0 - 3.0 bars towards said filter surface member.

7. An arrangement according to any of the preceding claims, ***characterized* in that** it comprises means (49) configured to spray a liquid onto said filter surface member for cleaning this.

8. An arrangement according to claim 7, ***characterized* in that** said jet impact area moving means (47, 48) is configured to also move said liquid spraying means (49) to scan at least a part of the area of the second side (46) of said filter surface member.

9. An arrangement according to claim 7 or 8, ***characterized* in that** said spraying means (49) is configured to spray liquid deriving from said liquid substance obtained by passing through said filter surface member from said space onto said filter surface member.

10. An arrangement according to any of the preceding claims, ***characterized* in that** it comprises means (21, 50) configured to enable removal of particles retained on said first side (31, 51) of the filter surface member after a stop of feeding of sludge to said first side of the filter surface member.

11. An arrangement according to any of the preceding claims, ***characterized* in that** it comprises a device (23) configured to create a negative gas pressure inside a casing (2) enclosing said filter body for removal of gas contained in said sludge through a top wall (7) of the casing.

12. An arrangement according to any of the preceding claims, ***characterized* in that** said filter surface member (5, 5') has filter openings with a diameter of 0.5 µm - 200 µm, 1 µm - 100 µm, 2 µm - 80 µm or 10 µm - 60 µm.

13. A method for filtrating a rough-filtrated sludge comprising the steps of feeding a rough-filtrated sludge onto a first side (31, 51) of at least one filter surface member (5, 5') of a filter body and making liquid substance of the sludge to pass through the filter surface member while retaining particles of the sludge onto said first side thereof, ***characterized* in that** said filter body is kept with said at least one filter surface member extending in a substantially vertical plane and the gravitation is utilised for obtaining passing of said liquid substance of the sludge through said filter surface member into a space (11, 42) on a second side (30, 46) of said member opposite to said first side, that at least one jet (32, 52) of gas is directed onto said second side of said filter surface member so as to promote passing of said liquid substance therethrough from said first to said second side thereof, and that the impact area of said jet is moved over said second side of the filter surface member.

14. Use of an arrangement according to any of claims 1-13 for filtrating a rough-filtrated sludge emanating from cattle droppings or sewage sludge, such as in connection with dwelling houses.
